**Europäisches Patentamt**

**European Patent Office**

**Office européen des brevets**

(19)

(11) Veröffentlichungsnummer : **0 412 441 B1**

(12)

# EUROPÄISCHE PATENTSCHRIFT

(45) Veröffentlichungstag der Patentschrift :
**11.01.95 Patentblatt 95/02**

(51) Int. Cl.$^6$ : **G01S 7/28**, G01S 13/72,
G01S 13/66

(21) Anmeldenummer : **90114878.3**

(22) Anmeldetag : **02.08.90**

(54) **Multifunktionsradar.**

(30) Priorität : **08.08.89 DE 3926216**
**08.08.89 DE 3926215**
**08.08.89 DE 3926197**
**08.08.89 DE 3926198**

(43) Veröffentlichungstag der Anmeldung :
**13.02.91 Patentblatt 91/07**

(45) Bekanntmachung des Hinweises auf die
Patenterteilung :
**11.01.95 Patentblatt 95/02**

(84) Benannte Vertragsstaaten :
**BE DE FR GB IT NL**

(56) Entgegenhaltungen :
**EP-A- 0 140 597**
**PROCEEDINGS OF THE IEEE, April 1963, Sei-**
**ten 596-601; J.D. MALLETT et al.:"Cumulative**
**probability of detection for targets approa-**
**ching a uniformly scanning search radar"**

(56) Entgegenhaltungen :
**PROCEEDINGS IEE, Band 113, Nr. 8, August**
**1966, Seiten 1277-1280; G.R.WHITFIELD:**
**"Optimisation of a surveillance radar"**
**RADAR-82, IEE INTERNATIONAL CONFEREN-**
**CE, London, 18. - 20. Oktober 1982, Sei-**
**ten15-19; E.R. BILLAM: "Design and**
**performance considerations in modern pha-**
**sed array radar"**
**RECORDS OF THE IEEE 1980 INTERNATIO-**
**NAL RADAR CONFERENCE, Arlington, 28. -**
**30.April 1980, Seiten 113-122; M.J. SARIG et**
**al.: "Implementation of a distributed node of**
**radar control"**

(73) Patentinhaber : **SIEMENS**
**AKTIENGESELLSCHAFT**
**Wittelsbacherplatz 2**
**D-80333 München (DE)**

(72) Erfinder : **Fichtner, Johannn, Dr. rer. nat.**
**Ringstrasse 119**
**D-8017 Ebersberg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Multifunktionsradar gemäß dem Oberbegriff des Patentanspruchs 1.

Ein Multifunktionsradar mit einer elektronisch phasengesteuerten Antenne hat eine Reihe von Aufgaben zu erfüllen. Insbesondere können wichtig sein: die Suche in verschiedenen Bereichen, das Auffinden von Objekten, für die eine Voreinweisung vorliegt, die Klärung möglicher Fehlalarme und gegebenenfalls die schnelle Zielverfolgungsinitiierung, die Verfolgung von Zielen verschiedener Kategorien, die passive Ortung (z.B. Triangulation und Trilateration) und das Erkennen von Clutter und Abschattungen.

Das Multifunktionsradar erfüllt diese Aufgaben durch das geeignete Zusammenwirken seiner in der Figur dargestellten Baugruppen. Zunächst gibt es dabei Baugruppen, die für die physikalische Generierung der Sendesignale, sowie für den Empfang und die Signalverarbeitung bis zur Plotbildung sorgen. Im einzelnen sind dies ein Signalgenerator 1, ein Sender 2, eine elektronisch phasengesteuerte Antenne 3, ein Empfänger 4 und eine Empfangssignalverarbeitungseinrichtung 5. Dazu tritt die elementare Koordination dieser Baugruppen, die z.B. sicherstellt, daß die Phasenschieber der Antenne 3 korrekt eingestellt sind, daß die Sende- und Empfangsfrequenzen zusammenstimmen und daß die Signalverarbeitung so erfolgt, daß sie zum gerade ausgesandten Signal paßt.

Die Baugruppe, die diese Koordination durchführt, wird als Radarsteuerungeseinrichtung 6 bezeichnet. Alle bisher erwähnten Baugruppen sollen unter dem Begriff Radarmeßgerät 7 zusammengefaßt werden.

Das so definierte Radarmeßgerät 7 ist in der Lage, Anweisungen auszuführen, in denen festgelegt ist, wohin (Keulenposition), wie lange (Beleuchtungsdauer) und wie (Signalform und Signalverarbeitungsform) das Multifunktionsradar "schauen" soll. Dabei ist die Beleuchtungsdauer durch die Signalform festgelegt. Eine solche Anweisung, die aus Keulenposition, Signalform und Signalverarbeitungsform besteht, soll als elementarer Radarauftrag bezeichnet werden. Das Radarmeßgerät muß also elementare Radaraufträge erhalten. Es generiert dann in Abhängigkeit vom Zustand der Außenwelt, d.h. dem Szenario 8, Plots bzw. Strobes und liefert diese an eine Multifunktionsradar- Zielverfolgungseinrichtung (Tracker) 9, die diese Informationen verarbeitet. Die verarbeitete Information wird an einen Feuerleitstand 10 geliefert.

Der Aufwand bei der Konstruktion des Radarmeßgeräts 7 schlägt sich nieder in der Menge ausführbarer elementarer Radaraufträge. Bei einem Phased-Array-Radar mit schmalem Radarstrahl ("Bleistiftkeule") kann innerhalb eines Raumwinkelbereichs eine Keulenposition frei ausgewählt werden. Die Verweildauer in dieser Keulenposition, die Signalform und die Signalverarbeitungsform können ebenfalls aus einer großen Vielfalt von Möglichkeiten ausgewählt werden. Berücksichtigt man darüber hinaus, daß im allgemeinen mehrere 100 solcher elementarer Radaraufträge pro Sekunde zu generieren sind, so erhält man eine Vorstellung von der Fülle technisch angelegter Möglichkeiten, die das Radarmeßgerät zur Verfügung stellt.

Unter einer Radarmanagement-Baugruppe 11 soll nun diejenige Baugruppe eines Multifunktionsradars verstanden werden, die durch geschickte Nutzung des Radarmeßgerätes 7 dafür sorgt, daß das Multifunktionsradar alle seine oben angedeuteten Aufgaben optimal erfüllt, und daß dabei etwa auftretende Zielkonflikte sachgerecht gelöst werden.

Vom Radarmeßgerät 7 aus gesehen besteht die Aufgabe der Radarmangement-Baugruppe 11 darin, zu jedem Zeitpunkt den günstigsten elementaren Radarauftrag zu erteilen. Die Komplexität des Radarmanagements resultiert dabei aus der unüberschaubar großen Anzahl der möglichen Kombinationen elementarer Radaraufträge.

Darunter ist in Abhängigkeit von den sich andauernd ändernden Umwelteinflüssen und der ebenfalls dynamischen taktischen Lage für jedes Zeitintervall die beste Kombination auszuwählen, damit die oben angedeuteten Aufgaben des Multifunktionsradars, das in der Figur mit 12 bezeichnet ist, optimal erfüllt werden.

Bisher wurden Radarmanagement-Probleme bei Multifunktionsradaren mit phasengesteuerten Antennen mittels heuristischer Verfahren angegangen, die keine angebbaren Zielfunktionen optimieren, offline vorgeplante Betriebsmoden zur Lösung der Suchaufgabe benutzen und eine nur beschränkte und langsame Anpassung an die veränderliche Umwelt zulassen.

Im Aufsatz von B.H. Scheff, D.G. Hammel: "Real-Time Computer Control of Phased Array Radars" in "Supplement to IEEE Transactions on Aerospace and Electronic Systems" Vol. AES-3, No. 6, Nov. 1967, Seiten 198 bis 206 ist ein mit einer elektronisch phasengesteuerten Antenne ausgestattetes Multifunktionsradar beschrieben, das in Realzeit rechnergesteuert wird und dessen Betriebsablauffolgen durch ein Management-Programm ausgeführt werden.

Aufgabe der Erfindung ist es, die Erzeugung der am häufigsten auftretenden elementaren Radaraufträge möglichst exakt zu behandeln, damit ein Grundgerüst für das Radarmanagement da ist. Da für den Einsatz eines Multifunktionsradars der Betrieb unter ECM-Bedingungen (Electronic Countermeasures-ECM) typisch ist, führt dies zur besonderen Aufgabe der besten Sendeleistungsverteilung im Raum als Funktion der Störleistungsverteilung bei der Suche. Die Suche stellt an das Radarmanagement die meisten Anforderungen, weil

2

hier die meisten Freiheitsgrade vorhanden sind.

Gemäß der Erfindung wird die gestellte Aufgabe durch die in den Patentansprüchen angegebenen Merkmale gelöst.

Die von Umwelt und Lage abhängige Güte von Sendeleistungsverteilungen läßt sich mittels einer Nutzenfunktion beschreiben. Deren dynamische Optimierung führt nach der Erfindung dann zur besten Suchleistungsverteilung und weiter zur Generierung der besten elementaren Radaraufträge bei der Suche.

Neben der Suche, die im typischen Betrieb weit mehr als die Hälfte der elementaren Radaraufträge beanspruchen dürfte, muß der Radarmanager alle vorher genannten Aufgaben des Multifuntionsradars berücksichtigen und entsprechende elementare Radaraufträge generieren und einplanen. Die Planung der Nicht-Suchaufträge wird hier nicht behandelt.

Die Erfindung wird im folgenden im einzelnen beschrieben.

Die Zeichnungen zeigen in

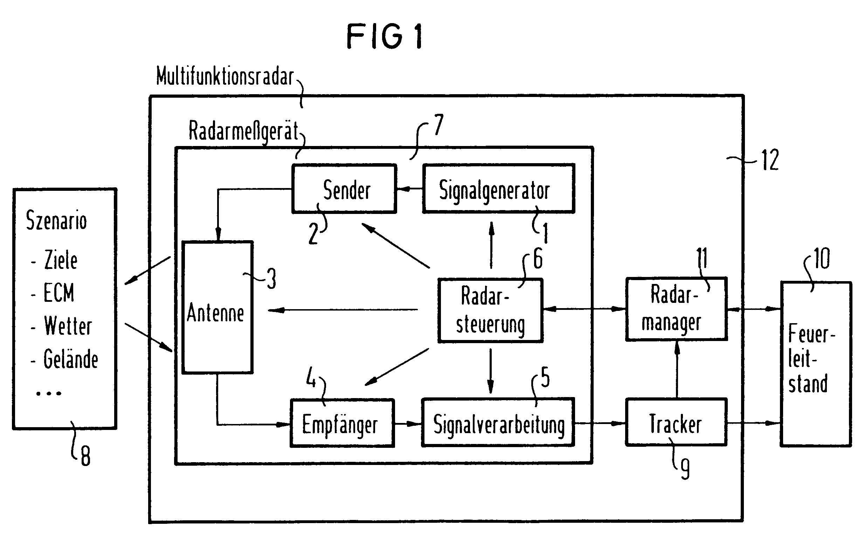

Fig. 1          das Blockschaltbild des bereits erläuterten Multifunktionsradars,

Fig. 2 und 3       zwei unterschiedliche Bedeckungsdiagramme, und

Fig. 4          den Verlauf einer den Forderungen entsprechenden Nutzenfunktion.

Fig. 5, 6 und 7     drei Fälle zur Illustration der Reichweitenrücknahme bei Störung.

Ziel der Suchaktivitäten eines Radars ist es, Objekte, die in den zu überwachenden Raum einfliegen, möglichst frühzeitig zu entdecken. Üblicherweise formuliert man das so: Die Reichweite soll möglichst hoch sein. Allerdings gibt es verschiedene Reichweitenbegriffe, die insbesondere dann, wenn die Abtastperiode frei wählbar ist, sauber unterschieden werden müssen. Dabei wird auf ihre Abhängigkeit von den im allgemeinen unbekannten und sehr weit streuenden Eigenschaften der zu entdeckenden Objekte hingewiesen. Weiter wird ein für die Optimierung des Radarmanagements geeigneter Reichweitenbegriff, die Überwachungsreichweite, ausgewählt.

Wie die Überwachungsreichweite im Grundfall, d.h. kein Clutter, keine Abschattungen, wohl aber Rauschstörer zugelassen, nach der Erfindung optimiert werden kann, wird gezeigt. Unter vertretbaren vereinfachenden Ausnahmen ist dies analytisch möglich. Es resultieren aus dieser Optimierung dreierlei Ergebnisse, nämlich die Überwachungsreichweite als Funktion des Leistungsanteils, die Signalform und Signalverarbeitungsform als Funktion des Leistungsanteils und die Abtastperiode als Funktion des Leistungsanteils.

Die Erfindung enthält auch Optimierungsangaben im Fall von Abschattungen bzw. Clutter. Da die exakte Lösung dieser Optimierungsaufgabe die optimale Signalform-Auswahl im Detail beinhaltet, läßt sich keine allgemeine Lösung angeben.

In der Radartechnik spielen verschiedene Reichweitenbegriffe eine Rolle. Hiervon sind allerdings die am meisten verbreiteten zur Problemlösung wenig geeignet: Die "eindeutige Reichweite" sagt nichts über die Entdeckungswahrscheinlichkeit konkreter Objekte aus. Die "Einzelentdeckungsreichweite" ist als Optimalitätskriterium nur geeignet, wenn die Abtastperiode (= Zeit zwischen zwei aufeinanderfolgenden Beleuchtungen derselben Keulenposition) a priori vorgegeben ist. Ohne diese Vorgabe würde die Optimierung zu unendlich langen Abtastperioden führen.

Auch die "kumulative Entdeckungsreichweite" ist wenig geeignet, da sie einmal analytisch schwer handhabbar ist, außerdem aber davon ausgeht, daß die Abtastperiode über mehrere Abtastungen hinweg vorausgeplant wird. Diese Voraussetzung ist aber in hochdynamischen Szenarien (u.a. mit Ein-/Ausschalten von Störern) nicht zu erfüllen, wenn sich das Radar schnellstmöglich an die Situation anpassen und folglich seine Abtastperiode immer wieder adaptieren soll.

Bei der Erfindung wird als Optimalitätskriterium die Überwachungsreichweite

$$R_{ü} = R_d - v_R \cdot T \quad (1)$$

vorgeschlagen, wobei $R_d$ die Einzelentdeckungsreichweite ist, $v_R$ die Radialgeschwindigkeit des "zu entdeckenden Objekts" (auf das Radar zu) und T die Abtastperiode. Daß $v_R$ und $R_d$ vom Verhalten und von den Eigenschaften des "zu entdeckenden Objekts" abhängen, zeigt schon, daß die Vorgehensweise "Bayes'sch" ist. D.h. die Optimierung basiert auf einer a priori-Annahme über die Umwelt, die das Radar voraussichtlich antreffen wird.

$R_d$ hängt außer von den Eigenschaften des "zu entdeckenden Objekts" von den Umwelteinflüssen (ECM, Clutter), von den festen Radarparametern, von den variablen Radarparametern (Signalform) und der angestrebten Entdeckungswahrscheinlichkeit $p_D$ (z.B. 95 %) ab. Die Überwachungsreichweite läßt sich verbal so interpretieren:

Überwachungsreichweite ist diejenige Entfernung $R_{ü}$, für die bei den angenommenen "zu entdeckenden Objekten" und den angenommenen Umweltbedingungen mit Wahrscheinlichkeit $p_D$ garantiert werden kann, daß ein radial mit Geschwindigkeit $v_R$ einfliegendes Objekt in einer Entfernung $R \geqq R_{ü}$ entdeckt wird.

Die im Zusammenhang mit der vorliegenden Erfindung gegebene Interpretation der Formel (1) strebt eine hohe sichere Entdeckungsentfernung ($p_D$-Quantil) an. Letzteres führt bei gleicher Objektgeschwindigkeit zu wesentlich kürzeren Abtastperioden als die Optimierung einer mittleren Entdeckungsreichweite.

Für die Überwachungsreichweite als Optimalitätskriterium spricht insbesondere das Prinzip der größtmöglichen Einfachheit. Sie ist die einfachste Reichweitendefinition, die eine sinnvolle Optimierung der Abtastperiode ermöglicht. Im gleich zu behandelnden "Grundfall" der Abhängigkeit $R_d(T)$ ermöglicht sie sogar eine analytische Optimierung.

Die Erfindung zeigt, wie die Optimierung der Überwachungsreichweite in einer Keulenposition die optimalen Werte für Überwachungsreichweite, Signalform und Abtastperiode für diese Keulenposition als Funktion des zur Verfügung stehenden Leistungsanteils liefert.

Im folgenden soll die Optimierung der Überwachungsreichweite im Grundfall erläutert werden.

Bei einem Luftverteidigungsradar wird man den ECM-Fall als denjenigen Fall ansehen müssen, der die Auslegung bestimmen sollte. Hat man sonst günstige Verhältnisse (kein Clutter, keine Abschattungen), dann läßt sich die (Einzel-) Entdeckungsreichweite in erster Näherung durch folgende Version der Radargleichung ausdrücken:

$$R_d = c' (T_B / N)^{1/4} , \quad (2)$$

wobei $c'$ eine Konstante ist, die vom "zu entdeckenden Objekt" und den festen Radarparametern abhängt. N ist die Rauschleistungsdichte. $T_B$ ist die gesamte Dauer der Signalform, wobei die Annahme zugrunde liegt, daß die Energie der Signalform proportional zu $T_B$ ist.

Der Leistungsanteil, der für eine Keulenposition zur Verfügung steht, ist nun gegeben durch:

$$P = T_B / T, \quad (3)$$

da die mittlere Leistung konstant bleibt. Wird nun P als vorgegeben angesehen, so erhält man durch Einsetzen von (3) in (2) und von (2) in (1):

$$R_ü = c' (T . P / N)^{1/4} - v_R . T. \quad (4)$$

Optimiert man nun $R_ü$ auf dem üblichen Weg durch Ableiten nach T und Nullsetzen der Ableitung, so erhält man (siehe Anhang)

$$T_{opt} = \left[ \left( \frac{c'}{4 v_R} \right)^4 \frac{P}{N} \right]^{1/3} . \quad (5)$$

Einsetzen in (4) liefert nach einigen Umformungen (siehe Anhang):

$$R_ü = \frac{3}{4} \left[ \frac{c'^4}{4 v_R} \frac{P}{N} \right]^{1/3} = R_d - v_R \cdot T_{opt}. \quad (6)$$

Ein Vergleich von (5) und (6) ergibt mit einfachen Umformungen (siehe Anhang):

$$R_ü = 3 . v_R . T_{opt} \text{ und} \quad (7)$$
$$R_d = 4 . v_R . T_{opt} . \quad (8)$$

Die Gleichung (6) liefert die optimierte Überwachungsreichweite als Funktion des Leistungsanteils; die Gleichung (5) gibt die zugehörige optimale Abtastperiode an. In der benutzten Näherung ist die Angabe einer optimalen Signalform trivial, da $T_B$ als einzige Kenngröße in (2) auftritt. Z.B. wäre ein Puls optimal, wenn man als sekundäres Kriterium die eindeutige Reichweite optimiert.

In der Praxis wird man eine eindeutige Reichweite $R_e$ anstsreben, die zwar deutlich über $R_d$ liegt, aber nicht ein Vielfaches von $R_d$ ausmacht. Gilt also z.B. mit c = Lichtgeschwindigkeit

$$c . T_B > 6 R_D, \quad (9)$$

d.h. wäre $R_e$ bei einem Puls größer als z.B. das 3-fache der Einzelentdeckungsreichweite, dann wird man die Energie in mehrere Pulse aufteilen, um einen möglichen Dekorrelationsgewinn zu realisieren und die Entfernugnsauflösung in einem günstigen Bereich zu halten.

Im folgenden wird die Optimierung der Überwachungsreichweite bei Abschattungen behandelt.

Die Gleichung (2) für die Einzelentdeckungsreichweite als Funktion der Signalform ist nur annähernd richtig. Will man Abschattungen und Clutter berücksichtigen, so muß diese Gleichung verallgemeinert werden.

Es befinde sich bei gegebener Keulenposition z.B. in der Entfernung $R_e$ ein massives Hindernis, z.B. ein Berg. Man spricht dann von einer Abschattung. Damit ist die Einzelentdeckungsreichweite durch $R_o$ nach oben beschränkt, da ein Objekt in größerer Entfernung auf keinen Fall entdeckt werden kann. Solange das durch (2) gegebene $R_d$ kleiner oder gleich $R_e$ ist, bleibt aber (2) gültig. Insgesamt erhält man:

EP 0 412 441 B1

$$R_d = \begin{cases} c' \, (T_B/N)^{1/4} \quad \text{falls} \quad T_B \leq \left(\dfrac{R_o}{c'}\right)^4 \cdot N \\[2em] R_o \qquad \qquad \text{sonst.} \end{cases} \qquad (10)$$

Aufbauend auf dieser Formel, kann man $R_\ddot{u}$ noch analytisch optimieren. Dabei ergibt sich, daß die Formeln (5) bis (8) gültig bleiben, solange der Leistungsanteil P kleiner ist, als der Wert $P_o$, der sich ergibt, wenn in (8) $R_d = R_o$ gesetzt wird, (5) eingesetzt wird, und man dann nach P auflöst. So ergibt sich:

$$P_o = 4 \, v_R \cdot N \cdot R_o^3 \cdot c'^{-4} \qquad (11)$$
$$T_o = R_o / (4 \, v_R). \qquad (12)$$

Steht ein größerer Leistungsanteil zur Verfügung, so kann die zusätzliche Leistung nicht mehr zur Steigerung von $R_d$, sondern ausschließlich zur Verringerung der Abtastperiode T verwandt werden. So erhält man als Abtastperiode

$$T_{opt} = \begin{cases} \left[\left(\dfrac{c'}{4v_R}\right)^4 \cdot \dfrac{P}{N}\right]^{1/3} \quad \text{für } P \leq P_o \\[3em] T_o \cdot \dfrac{P_o}{P} \qquad \qquad \text{für } P > P_o. \end{cases} \qquad (13)$$

Als Formel für die Überwachungsreichweite ergibt sich:

$$R_\ddot{u} = \begin{cases} \dfrac{3}{4} \left[\dfrac{c'}{4v_R}^4 \cdot \dfrac{P}{N}\right]^{1/3} \quad \text{für } P \leq P_o \\[3em] R_o - v_R \cdot T_o \cdot \dfrac{P_o}{P} \qquad \text{für } P > P_o. \end{cases} \qquad (14)$$

Die Signalform geht bei der benutzten Näherung wiederum nur über die Beleuchtungszeit $T_B$ ein. In der Praxis wird man Signalformen bevorzugen, für die die eindeutige Reichweite größer (aber nur wenig größer) als $R_o$ ist. Diese Überlegung gilt für den Fall $P > P_o$. Sonst bleiben die Aussagen, die im Zusammenhang mit der Erläuterung des Grundfalls über die Signalform-Auswahl gemacht wurden, gültig.

Im folgenden soll eine Situation erwähnt werden, in der (2) und die darauf aufsetzende Optimierung der Überwachungsreichweite nicht korrekt sind: Für sehr kleine Beleuchtungszeiten ist nämlich die Reichweite nicht durch (2), sondern durch

$$R_d = \min \left(T_B \cdot \frac{c}{2} ; \, c'(T_B / N)^{1/4}\right) \qquad (15)$$

bestimmt, da nur Objekte entdeckt werden können, deren Echos während einer Zeitspanne $T_o'$ kleiner als die Zeitspanne $T_B$ zum Radar zurückkommen. In der Praxis wird dieser Bereich, in dem $R_d$ linear mit $T_B$ ansteigt, selten eine Rolle spielen. Dennoch ist es wichtig, diese Beschränkung zu berücksichtigen, wo sehr kleine $T_B$, d.h. $T_B$ mit

$$T_B < T'_o = \left[\left(\frac{2c'}{c}\right)^4 N^{-1}\right]^{1/3} \qquad (16)$$

auftreten. Die allgemeinen Formeln für die optimale Überwachungsreichweite, die optimale Abtastperiode und die optimale Signalform bei dieser letzten Verallgemeinerung der Formel für die Entdeckungsreichweite

$$R_d = \begin{cases} T_B \cdot \dfrac{c}{2} & \text{für } T_B < T_0' \\[2em] c' \left( T_B/N \right)^{1/4} & \text{für } T_0' \leq T_B \leq \left( \dfrac{R_0}{c'} \right)^4 \cdot N \\[2em] R_0 & \text{für } \left( \dfrac{R_0}{c'} \right)^4 \cdot N < T_B \end{cases} \qquad (17)$$

sollen hier nicht angegeben werden. Es handelt sich jedoch um ein analytisch vollständig lösbares Problem.

Im folgenden wird noch die Optimierung der Überwachungsreichweite bei Clutter behandelt.

Grundsätzlich andere Probleme kommen nämlich hinzu, wenn in der betrachteten Keule Clutter vorhanden ist. Dann ist die Entdeckungsreichweite in relativ komplizierter Weise von der Signalform und der Radialgeschwindigkeit abhängig (Dopplerfilter, Blindgeschwindigkeiten, ...).

Überdies ist eine Optimierung unter der Annahme einer bestimmten Radialgeschwindigkeit nicht sinnvoll, weil die resultierenden Signalformen bei anderen (ähnlich wahrscheinlichen) Radialgeschwindigkeiten vollständig versagen würden (Blindgeschwindigkeitsproblem). Wollte man eine echte Optimierung unternehmen, so müßte man einen Ansatz verwenden, der zu einem sehr komplizierten Optimierungsproblem führt, das weder analytisch lösbar, noch einer schnelleren numerischen Behandlung zugänglich sein dürfte (schnell im Sinne von: im Rahmen des Radarmanagements online durchführbar).

Es wird daher für diesen Fall eine weitgehend heuristische Vorgehensweise vorgeschlagen, die zu gegebenem Spektrum zu entdeckender Objekte, zu gegebener Beleuchtungszeit, Clutterform und Störleistung eine annähernd "optimale" Entdeckungsreichweite, sowie die zugehörige Signalform liefert.

Für das der Erfindung zugrunde liegende Problem, eine Rahmenstruktur für ein Radarmanagement anzugeben, ist die Kenntnis dieser Heuristiken auch gar nicht nötig. Wichtig ist nur, daß es - wenn auch mit vielen Vereinfachungen - möglich ist, eine NÄherung für den Verlauf der Funktion

$$R_d^{opt} (T_B) \qquad (18)$$

auch in Clutter anzugeben, genauso wie das (17) ohne Clutter tut. Weiter ist es möglich, die zugehörigen Signalformen und Signalverarbeitungsformen anzugeben.

Kennt man (18), so ist die numerische Optimierung der Überwachungsreichweite, die sich durch Einsetzen von (3) in (18) und von (18) in (1) zu

$$R_ü = R_d^{opt} (T \cdot P) - v_R \cdot T \qquad (19)$$

ergibt, leicht möglich. Auf diese Weise erhält man wie in der Abhandlung des Grundfalls und des Abschattungsfalls als Funktion des Leistungsanteils P einer Keule die Überwachungsreichweite $R_ü$, die Signalform und Signalverarbeitungsform sowie die Abtastperiode.

Diese Funktionen entsprechen den Gleichungen (5) und (6) im Grundfall. Es ist sinnvoll, die Optimierung offline durchzuführen, damit online schnelle Funktionsprozeduren zur Verfügung stehen.

Im vorstehenden Teil wurde gezeigt, wie die Optimierung der Überwachungsreichweite in einer Keule zur Funktion $R_ü(P)$ führt, und wie dabei Signalform und Abtastperiode durch P festgelegt werden.

Im folgenden geht es darum, die Suchperformance des Multifunktionsradars durch optimale Verteilung des insgesamt für die Suche verfügbaren Leistungsanteiles möglichst günstig zu gestalten. Dazu wird zunächst der Begriff "Suchperformance" operationalisiert, und zwar mittels einer Nutzenfunktion.

Diese Nutzenfunktion wird dann unter der Nebenbedingung eines begrenzten zur Verfügung stehenden Leistungsanteils optimiert. Diese Optimierung geschieht zum einen für den Fall, daß in allen beteiligten Keulen kein Clutter und keine Abschattungen vorliegen, wobei auch Grenzfälle diskutiert werden, die der Forderung nach einheitlicher Überwchungsreichweite einerseits und einer fest vorgegebenen Leistungsverteilung andererseits entsprechen. Zum anderen erfolgt eine Optimierung für den allgemeinen Fall, also auch für Fälle mit Keulenpositionen, in denen Clutter und Abschattungen vorliegen. Dies führt zu einer Methode zur Generierung von Suchaufträgen. Diese Methode optimiert eine im folgenden noch definierte Nutzenfunktion, verwirklicht aber zugleich eine dynamische Anpassung an zeitlich veränderliche Vorgaben und Außenwelteinflüsse.

Die Suchperformance eines Radars ist in sinnvoller Weise beschrieben, wenn für alle Raumwinkelelemente (= Keulenpositionen) die Überwachungsreichweite gegeben ist. Dies definiert ein dreidimensionales Raumgebiet, das in der bereits vorstehend genauer beschriebenen Weise zuverlässig überwacht wird. Dieses Raumgebiet soll als das momentane Bedeckungsgebiet des Radars bezeichnet werden.

Ein Phased-Array-Radar eröffnet die Möglichkeit, das Bedeckungsgebiet sehr flexibel zu gestalten, wobei sich die Frage erhebt, welches von den realisierbaren Bedeckungsgebieten optimal ist. Der Beantwortung dieser Frage kommt man einen Schritt näher, wenn bei je zwei Bedeckungsgebieten entscheidbar ist, ob sie "gleich gut" sind, bzw. welches der beiden Bedeckungsgebiete "besser" ist. Dann kann man nämlich eine Nutzenfunktion auf der Menge der Bedeckungsgebiete definieren, deren Optimierung dann zum "optimalen" realisierbaren Bedeckungsgebiet führt.

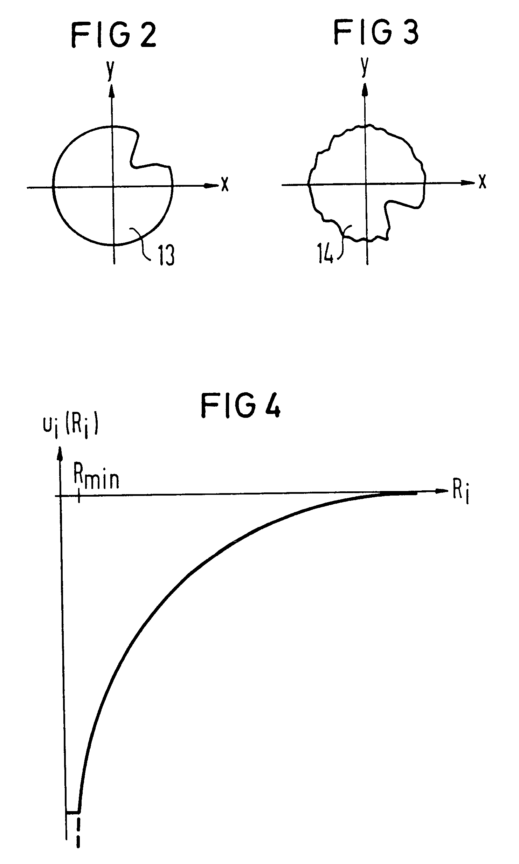

Allerdings ist der Vergleich der Güte zweier Bedeckungsgebiete schwer, wie man am Beispiel nach den Fig. 2 und 3 sieht, die zwei unterschiedliche Bedeckungsgebiete 13 bzw. 14 in der x-y-Ebene zeigen. Daher wird bei der Erfindung auf direktem Weg eine sinnvolle Nutzenfunktion aufgestellt.

Zunächst kann man festhalten, daß ein Bedeckungsgebiet A "besser" als ein zweites B ist, wenn in jedem Raumwinkelelement bei A die Überwachungsreichweite größer ist als bei B. Das bedeutet, daß die Nutzenfunktion eine monoton steigende Funktion der Überwachungsreichweiten in allen Keulenpositionen sein muß:

$$u(R_1, R_2, \ldots, R_n) \leqq u(R'_1, R'_2, \ldots, R'_n)$$

$$\text{(20)}$$

$$\text{falls } R_1 \leqq R'_1, R_2 \leqq R'_2, \ldots, R_n \leqq R'_n,$$

wobei $n$ die Anzahl der Keulenpositionen ist, und $R_i$ (bzw. $R'_i$) die Überwachungsreichweite in der i-ten Keule ist.

Nun muß aber noch festgelegt werden, wie die Reichweiten in den verschiedenen Keulenpositionen gegeneinander zu gewichten sind. Anders formuliert:

Welche Reichweiteneinbuße in der Keulenposition $i$ ist man bereit hinzunehmen, wenn man dafür einen (Überwachungs-) Reichweitengewinn $\Delta R$ in der Keulenposition $j$ erhalten kann?

Die Beantwortung dieser Frage wird sehr sehr schwierig, wenn man die Antwort von den Reichweiten in allen anderen Keulenpositionen $k$ (mit $i \neq k \neq j$) abhängen läßt. Nimmt man dagegen - wie sehr oft bei der Aufstellung von Nutzenfunktionen - an, daß die Antwort auf obige Frage davon unabhängig ist, so läßt sich die Nutzenfunktion in der speziellen Form

$$u(R_1, \ldots, R_n) = \sum_{i=1}^{n} u_i(R_i) \qquad \text{(21)}$$

schreiben, d.h. man darf den Gesamtnutzen als die Summe der Einzelnutzen in den einzelnen Keulenpositionen schreiben. Es bleiben noch diese zu bestimmen.

Bisher wissen wir nur, daß $u_i(R_i)$ eine monoton steigende Funktion ist. Es wird sicher nicht möglich sein, diese Funktion ein für allemal anzugeben, da der Nutzen, den eine gewisse Reichweite in einer gewissen Keulenposition bringt, drastisch von der Bedrohungssituation abhängt. Ist etwa bekannt, wo gegnerische Flugzeuge einfliegen werden, so bringt eine hohe Überwachungsreichweite in den entsprechenden Raumwinkelbereichen einen höheren Nutzen als in Raumwinkelbereichen, die weniger gefährdet sind, oder die sogar von Nachbarsenscren zuverlässig abgedeckt werden. Man kann daher nur erwarten, daß $u_i(R_i)$ bis auf einen (oder mehrere) Parameter angegeben werden kann. Es werden nun einige Forderungen an die Funktion $u_i(R_i)$ aufgestellt und dann wird nach dem Prinzip der größtmöglichen Einfachheit eine Struktur dieser Funktion angegeben, die einfach ist und diese Forderungen erfüllt. Sinnvolle Forderungen sind:

a) $u_i(R_i)$ ist monoton steigend,

b) $u_i(R_i)$ erreicht für $R \to \infty$ einen asymptotischen Wert (ohne Einschränkung 0); denn Reichweiten jenseits gewisser Grenzen sind weder für die Bekämpfungseinleitung, noch für die Lagedarstellung von Vorteil,

c) $u_i(R_i)$ steigt bei kleinen Reichweiten steil an,

d) bei ganz kleinen Reichweiten, die keine rechtzeitige Einleitung einer Bekämpfung mehr zulassen, ist der Nutzen konstant (auf niedrigstem Niveau). Allerdings wird diese Eigenschaft im "typischen Betrieb" keine wesentliche Rolle spielen, so daß man sie beim ersten Anlauf wohl sogar weglassen darf.

Fig. 4 zeigt den qualitativen Verlauf einer Nutzenfunktion $u_i(R_i)$, die diese Forderungen erfüllt. Als einfacher Ausdruck für eine solche Nutzenfunktion bietet sich

$$u_i (R_i) = \begin{cases} - c_i \, R_i^{-\beta} & \text{für } R \gtrless R_{min} \\ \\ - c_i \, R_{min}^{-\beta} & \text{für } R < R_{min} \end{cases} \qquad (22)$$

oder bei Vernachlässigung der letzten Forderung (Forderung nach Konstanz für sehr kleine $R_i$ ist evtl. entbehrlich, so daß sich in Fig. 4 der gestrichelte Verlauf links unten ergibt)

$$u_i (R_i) = - c_i \, R_i^{- \beta} \quad (23)$$

an, wobei $\beta$ eine positive, von i unabhängige Konstante ist. Im Fall von (23) ist die gesamte Nutzenfunktion wegen (21)

$$u (R_1, \ldots, R_n) = - \sum_{i=1}^{n} c_i \, R_i^{-\beta} . \qquad (24)$$

Die $c_i$ werden normalerweise nicht von Keulenposition zu Keulenposition differieren, sondern in Raumwinkelbereichen mit einheitlicher Bedrohungssituation einen einheitlichen Wert aufweisen.

Bei der Beschreibung der Erfindung wurde eingangs diskutiert, wie sich die Überwachungsreichweite $R_i$ in einer beliebigen Keulenposition als Funktion des für diese Keule zur Verfügung stehenden Leistungsanteils $p_i$ bestimmen läßt. Vorstehend wurde eine Funktion der $R_i$ eingeführt, die die "Suchperformance" des Systems in Abhängigkeit von den $R_i$ beschreibt. Optimale "Suchperformance" erhält man nun durch Maximieren der Nutzenfunktion

$$u (R_1(p_1), R_2(p_2), \ldots, R_n(p_n) ) = \text{max} \quad (25)$$

unter der Nebenbedingung

$$\sum_{i=1}^{n} p_i = 1 - v, \qquad (26)$$

wobei v der für die Verfolgung nötige Leistungsanteil ist. Diese Nebenbedingung reicht zur Beschreibung der Situation aus, wenn die Gesamtleistung beliebig auf die vorhandenen Keulenpositionen aufgeteilt werden kann, wie das bei angehaltener Antenne der Fall ist.

Bei rotierender Antenne läßt sich die Leistung nicht beliebig auf die Keulenpositionen verteilen, da nicht zu jeder Zeit jede Keulenposition beleuchtbar ist. Dies führt neben (26) zu weiteren komplexen Nebenbedingungen, auf deren Behandlung hier nicht eingegangen wird.

Optimierungsaufgaben mit Nebenbedingungen löst man mit dem Verfahren von Lagrange. Bei der Optimierungsaufgabe (25), (26) resultieren dabei außer (26) noch folgende n Gleichungen für die Unbekannten $p_1, p_2, \ldots p_n$ und $\lambda$ :

$$\frac{\partial}{\partial p_i} u(R_1(p_1), R_2(p_2), \ldots, R_n(p_n) ) = \lambda, \, i = 1,\ldots,n. \quad (27)$$

Solche Gleichungssysteme lassen sich in einfachen Fällen, bei denen z.B. kein Clutter und keine Abschattungen vorliegen, analytisch lösen. Ist eine analytische Lösung nicht möglich, so lassen sich Iterationsverfahren anwenden, wobei auch gleich ein weiterer wichtiger Aspekt berücksichtigt werden kann.

Es wird zunächst nur diskutiert, wie man zu fest vorgegebenen Parametern (wie Störleistung, Verfolgungslast, ...) eine "beste" Leistungsaufteilung erhält. Die Zeitabhängigkeit der Parameter bleibt außer Betracht. Man spricht in solchen Fällen von einer statischen Optimierung; diese statische Optimierung wird im folgenden erläutert und gilt also für den sogenannten Grundfall.

Für die Überwachungsreichweite für den sogenannten Grundfall wurde die Gleichung (6) abgeleitet, die hier nicht wiederholt wird.

Wenn man in der Gleichung (6) den Keulenindex i überall hinzufügt, gilt für jede Keule i(1...n):

$$R_i = \frac{3}{4} \left[ \frac{c'^4_i}{4v_{R_i}} \cdot \frac{p_i}{N_i} \right]^{1/3} \cdot \qquad (28)$$

Hierin ist $c'_i$ ein in Raumwinkelbereichen mit einheitlicher Bedrohungssituation einheitlicher Wert, $V_{R_i}$ die für diese Bedrohungssituation typische Radialgeschwindigkeit eines zu entdeckenden, auf das Radar zuflie-genden Objekts, $N_i$ die Rauschleistungsdichte der i-ten Antennenkeule und $p_i$ der für die i-te (i = 1...n) Keule zuzuteilende Leistungsanteil.

$$u\,(R_1, \ldots, R_n) = -\sum_{i=1}^{n} \frac{3}{4} c_i \left[ \frac{c'^4_i}{4v_{R_i}} \cdot \frac{p_i}{N_i} \right]^{-\beta/3} \cdot \qquad (29)$$

Die Gleichungen (8) lauten daher

$$\frac{\beta}{4} c_i \left[ \frac{c'^4_u}{4v_{R_u}} \cdot \frac{1}{N_i} \right]^{-\beta/3} p_i^{-\beta/3-1} = \lambda \cdot \qquad (30)$$

Auflösen nach $p_i$ ergibt:

$$p_i = \left[ \frac{\beta c_i}{4} \left( \frac{c'^4_i}{4v_{R_i} N_i} \right)^{-\beta/3} \right]^{\frac{1}{\beta/3+1}} \cdot \qquad (31)$$

Führt man die neuen Konstanten

$$\alpha = \frac{\beta/3}{\beta/3 + 1}; 0 < \alpha < 1 \qquad (32)$$

und

$$A_i = \left[ \frac{\beta c_i}{4} \left( \frac{c'^4_i}{4v_{R_i}} \right)^{-\beta/3} \right]^{\frac{1}{\beta/3 + 1}} \qquad (33)$$

ein, so erhält man

$$p_i = \lambda^{\frac{-1}{\beta/3 + 1}} \cdot A_i N_i^{\alpha}. \qquad (34)$$

Das Gleichungssystem (7), (8) wird daher gelöst durch

$$p_i = \frac{A_i N_i^{\alpha}}{\sum\limits_{j=1}^{n} A_j N_j^{\alpha}} (1-v). \qquad (35)$$

Damit ist die im Sinn der oben definierten Optimalitätskriterien beste Leistungsverteilung auf die Keulen gefunden.

Besonders instruktiv sind die beiden Extremfälle $\alpha = 0$ und $\alpha = 1$. Sie sollen für den Fall betrachtet werden, daß alle Keulenpositionen "von der gleichen Art sind". D.h. es wird bei der Berechnung der Überwachungsreichweite in jeder Keule derselbe Rückstrahlquerschnitt und dieselbe Radialgeschwindigkeit verwendet und die Parameter $c_i$, die in der Nutzenfunktion (5) die Wichtigkeit der i-ten Keule beschreiben, sollen nicht von i abhängen. Damit sind auch die $A_i$ von i nicht abhängig.

Betrachtet man nun bei der Gleichung (22) den Grenzfall $\alpha \to 0$ (oder äquivalent dazu $\beta \to 0$), so ist nun auch $p_i$ von i unabhängig. Das bedeutet, daß die Radarsuchleistung gleichmäßig auf alle Keulen verteilt wird, unabhängig davon, wie die Störleistungen $N_i$ verteilt sind. Dieser Grenzfall entspricht, grob gesprochen, einem Radar ohne Radarmanagement.

Im anderen Grenzfall $\alpha \to 1$ (oder äquivalent dazu $\beta \to \infty$) ist der Leistungsanteil $p_i$ proportional zur Störleistung $N_i$. Das bedeutet, daß wegen (15) in jeder Keule sich dieselbe Überwachungsreichweite ergibt. Es folgt weiter, daß auch die Abtastperiode für alle Keulen einheitlich ist.

Der eigentlich interessante Fall $0 < \alpha < 1$ deckt die möglichen Kompromisse zwischen starrer Leistungsverteilung ($\alpha = 0$) und starren Reichweitenverhältnissen ($\alpha = 1$) ab. Somit wird ein elastisches Zurücknehmen der Reichweiten in den gestörten Bereichen möglich; die Leistung wird zwar auf gestörte Bereiche konzentriert, die Reichweite in den ungestörten Bereichen wird jedoch nur wenig zurückgenommen. Da $\alpha$ die Steifigkeit des Bedeckungsdiagramms beschreibt, könnte man $\alpha$ den Steifigkeitsprameter des ECCM-Managements nennen. Taugliche Werte für $\alpha$ müßten duch Simulation ermittelt werden.

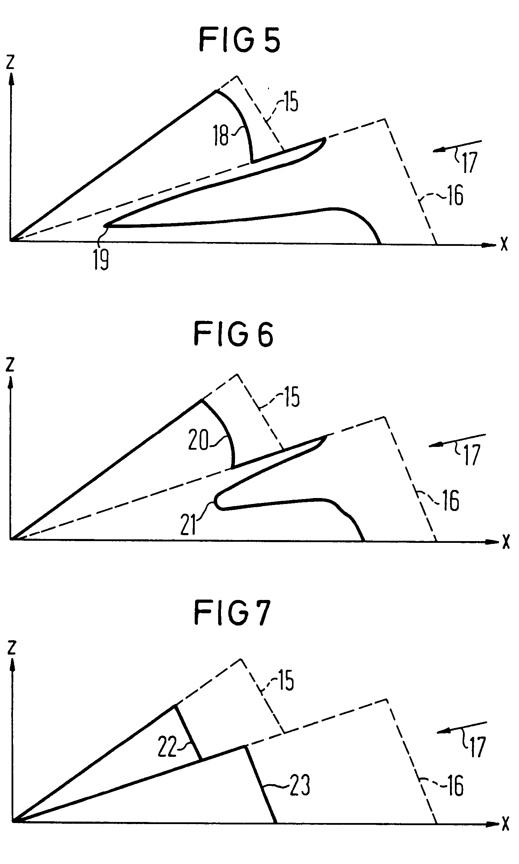

Fig. 5, 6 und 7 zeigen zur Illustration drei Fälle der Reichweitenrücknahme bei Störung, ausgehend von einem idealen Bedeckungsgebiet 15, 16 (gestrichelt gezeichnet), und zwar für den Fall, daß der Steifigkeitsparameter $\alpha$ durch $\alpha = 0$ (Fig. 5), durch $0 < \alpha < 1$ (Fig. 6) und durch $\alpha = 1$ (Fig. 7) gegeben ist. Die Störrichtung im x-z-Koordinatensysstem ist in allen drei Fällen durch den Pfeil 17 dargestellt. Im Fall $\alpha = 0$ (Fig. 5) erkennt man, wie die starre Leistungsverteilung zu tiefen Reichweiteneinbrüchen im stark gestörten Gebiet 19 führt. Im Falle $\alpha = 1$ (Fig. 7) wird dagegen in den Gebieten 22 und 23 die Überwachungsreichweite starr zurückgenommen. Im Fall $0 < \alpha < 1$ (Fig. 6) ist zu erkennen, wie die Überwachungsreichweite im gestörten Gebiet 21 elastisch, dagegen in den ungestörten Bereichen, z.B. im Gebiet 20, nur wenig zurückgenommen wird.

Vorstehend wurde bei der Optimierung der in Gleichung (24) angegebenen Nutzenfunktion explizit davon Gebrauch gemacht, daß die Überwachungsreichweite als Funktion des Leistungsanteils einer Keulenposition durch die relativ einfache Funktion nach Gleichung (28) gegeben ist. Es wurde also diskutiert, wie man zu fest vorgegebenen Parametern (wie Störleistung, Verfolgungslast, ...) eine "beste" Leistungsaufteilung erhält. Die Zeitabhängigkeit der Parameter blieb außer Betracht. Man spricht in solchen Fällen von einer statischen Optimierung.

Nun können sich aber Umweltbedingungen und Verfolgungslast innerhalb einer durchschnittlichen Abtastperiode gravierend ändern. Damit ist eine statische Betrachtungsweise nicht ausreichend. Es liegt ein zeitabhängiges (dynamisches) Optimierungsproblem vor, das durch die Erfindung ebenfalls gelöst wird.

Im folgenden wird ein allgemeines Verfahren beschrieben, mit dessen Hilfe die Nutzenfunktion (24) optimiert werden kann. Zunächst ist lediglich von einer statischen Optimierung unter der Nebenbedingung (26) die Rede.

Dabei darf davon ausgegangen werden, daß die optimale Überwachungsreichweite als Funktion des Leistungsanteils $R_i(p_i)$ eine konvexe, streng monoton steigende Funktion ist:

$$\frac{d^2 R_i}{dp_i^2} \leqq 0. \quad (36)$$

Setzt man nun die Funktion (24) in die Gleichungen (27) ein, so erhält man als Bestimmungsgleichungen für $p_i$

$$\frac{\partial u}{\partial p_i} = c_i \, \beta \, (R_i(p_i))^{-\beta-1} \frac{d R_i}{d p_i} = \lambda, \quad (37)$$

wobei $\lambda$ so zu wählen ist, daß

$$\sum_{i=1}^{n} p_i = 1 - v, \qquad (38)$$

gilt.

Wegen

$$\lim_{p_i \to 0} R_i(p_i) = 0 \quad (39)$$

ist die linke Seite von (37) eine Funktion von $p_i$, die für $p_i \to 0$ gegen $+\infty$ strebt und für $0 < p_i < 1$ streng monoton fällt. Aus diesen Eigenschaften folgt, daß die Gleichung (37) für jedes $\lambda > \lambda_{min}$ genau eine Lösung besitzt.

Das heißt, daß sich der Leistungsanteil für eine Keule aus der Lösung einer einzigen Gleichung ergibt. Die Leistungsanteile der anderen Keulen gehen nur über den Parameter $\lambda$ ein. Es ist folglich nicht nötig, in größeren Zeitabständen die Leistungsanteile für alle Keulen vorauszuplanen, sondern man kann sich darauf beschränken, bei jeder Keulenposition den Leistungsanteil nur dann zu berechnen, wenn diese Keulenposition tatsächlich beleuchtet werden soll.

Dies vermindert einerseits drastisch den Rechenaufwand. Andererseits führt diese Vorgehensweise direkt zu einem praktikablen Vorgehen bei mit der Zeit sich ändernden Parametern, d.h. es ist für eine dynamische Optimierung verwendbar.

Die Adaption an die Gesamtlast geschieht durch die Fortschreibung von $\lambda$. Ein Verfahren hierzu erfordert bei jeder Beleuchtung, d.h. Generierung eines elementaren Radarauftrages, folgende Schritte a bis d, wobei sowohl $\lambda$ als auch die Summe P der tatsächlichen Such-Leistungsanteile $p_i$ jeweils fortgeschrieben wird:

a) Berechnung einer Lösung $p_i'$ der Gleichung (37) mit dem alten $\lambda$; gleichzeitig Bestimmung von $f'(p_i')$ der Ableitung der rechten Seite der Gleichung (37) an der Stelle $p_i'$

b) Anpassung des Leistungsanteils gemäß

$$p_{i,neu} = p'_i \cdot \frac{1-v}{P_{alt} - p_{i,alt} + p'_i} \quad (40)$$

und Generierung des entsprechenden elementaren Radarauftrags.

c) Fortschreibung von P gemäß

$$P_{neu} = P_{alt} - P_{i,alt} + P_{i,neu} \quad (41)$$

d) Fortschreibung von $\lambda$ gemäß

$$\lambda_{neu} = \lambda_{alt} - f'(p'_i) \cdot (p_{i,neu} - p'_i) \quad (42)$$

oder einer ähnlichen Iterationsgleichung.

Dieses Verfahren korrigiert also bei jeder Beleuchtung sowohl den Leistungsanteil der betroffenen Keulenposition als auch $\lambda$ so, daß sowohl (37) als auch (38) "längerfristig annähernd" erfüllt sind.

Wären die Umweltbedingungen und die Verfolgungslast konstant, so würde sich mittels dieses Iterationsverfahrens die Lösung des Gleichungssystems (26), (27) und damit die optimale Leistungsaufteilung ergeben. Ausgehend von einer beliebigen Suchperformance würde mit einem Iterationsschritt pro elementarem Radarauftrag die Suchperformance gegen die optimale konvergieren. Dabei ist über die Schnelligkeit der Konvergenz noch nichts ausgesagt.

Der Vorteil des dargestellten iterativen Vorgehens gegenüber dem Versuch, die $p_i$ auf längere Zeit exakt zu planen, besteht in der besseren Fähigkeit auf eine veränderliche Umwelt zu reagieren. Außerdem kann die Suchaufgabe durch Online-Planung gelöst werden.

Der Vorteil dieser "der Praxis angepaßten Näherungslösung" des Systems (26), (27) gegenüber dem Versuch, bei jeder Beleuchtung das komplette Gleichungssystem zu lösen, ist doppelt: Zum einen wäre nämlich der Rechenaufwand enorm und zum anderen kann man nicht die elementaren Radaraufträge aus der Vergangenheit rückgängig machen; damit steht nicht zu jedem Zeitpunkt die gesamte Leistungsverteilung neu zur Disposition, sondern es kommt nur darauf an, bezüglich der gerade behandelten Keulenposition $i_o$ zu optimieren.

Zusammenfassend kann man folgende Vorteile durch die Anwendung des beschriebenen Iterationsverfahrens bei einem Multifunktionsradar feststellen:

Es bietet eine sofortige Adaption an Veränderungen der Umwelt (z.B. Verfolgungslast v und Störleistungen $N_i$). Es konvergiert im statischen Fall gegen die exakte Lösung. Es erfordert keinen übertriebenen Rechenaufwand. Es führt zu einem überschaubaren, gegenüber nachträglichen heuristischen Modfikationen offenen Rechenablauf. Im Hinblick auf solche beim Vorliegen von Simulationserfahrungen mögliche Modifikationen wurde zunächst die einfachste Form gewählt.

Nach einer vorteilhaften Ausführungsform der Erfindung erfolgt diese Iteration im Gleichschritt mit der Generierung der elementaren Radaraufträge, d.h. für diejenige Keulenposition, die im nächsten Moment beleuchtet werden soll, wird ein Iterationsschritt durchgeführt. Der zugehörige Rechenablauf für eine dynamische Optimierung wird im folgenden in groben Zügen dargestellt.

1. Auswahl der nächsten Keulenposition (wird im folgenden noch behandelt).

2. Feststellung der Störleistung in dieser Keulenposition.

3. Lösung der Gleichung (37) unter Benutzung der - sich aus Störleistung und sonstigem Wissen über die Keulenposition ergebenden - Funktion $R_i(p_i)$.

4. Anpassung des Leistungsanteils gemäß (40).

5. Ableitung einer optimalen Abtastperiode und Generierung des optimalen elementaren Radarauftrages.

11

6. Fortschreibung von P und $\lambda$ ; (41) und (42).

7. Vormerken des geplanten Zeitpunktes für die nächste Beleuchtung dieser Keulenposition (wird im folgenden noch behandelt).

Dabei fehlt aber noch ein wesentlicher Aspekt, nämlich die zeitliche Reihenfolge, in der die einzelnen Keulenpositionen behandelt werden. Das ist relativ einfach, wenn alle überhaupt beleuchtbaren Keulenpositionen zu jeder Zeit erreichbar sind (angehaltene Antenne). Dieser Fall wird im folgenden behandelt. Auf den wesentlich komplexeren Fall einer rotierenden Antenne wird in diesem Zusammenhang nicht eingegangen. Abschließend wird dann noch die Initialisierung des Radarmanagements behandelt.

Bei angehaltener Antenne ist jede Keulenposition entweder überhaupt nicht beleuchtbar, oder aber zu beliebiger Zeit. Für diesen Fall ist - von Initialisierungsproblemen, die später noch abgehandelt werden, abgesehen - die zeitliche Organisation sehr einfach.

Wie in der Beschreibung der Erfindung vorher bereits gezeigt, ergibt sich nämlich bei der Optimierung der Überwachungsreichweite eine optimale Abtastperiode $T_{opt}$. Damit ist aber festgelegt, zu welchem Zeitpunkt eine gegebene Keulenposition zum nächsten Mal abgetastet werden sollte:

$$T_{soll, j+1} = T_{ist, j} + T_{opt}, \quad (43)$$

wobei $T_{opt}$ die optimale Abtastperiode für diese Keulenposition ist, so wie sie sich bei der j-ten Beleuchtung aus der Optimierung der Überwachungsreichweite ergibt.

Sicherlich läßt sich dieser Plan nicht immer ganz exakt einhalten, obwohl er schon die zur Zeit seiner Aufstellung gültigen Randbedingungen berücksichtigt. Es ist aber eine sinnvolle Vorgehensweise, jeweils die Keulenposition als nächste zu beleuchten, für die $T_{soll, j+1}$ am niedrigsten ist. Damit läßt sich auf einfachste Weise eine Feinabstimmung bei der Radarplanung erreichen.

In der Praxis wird man aus Rechenzeitgründen nicht gerne immer wieder neue Elemente in eine Liste von einigen tausend Elementen einordnen. Es ist aber auch durchaus ausreichend, wenn man nach einem Raster (z.B. 1/10 sec) sortiert und die Unterschiede zwischen den geplanten Abtastzeiten vernachlässigt, die kleiner sind als das Raster.

Bisher wurde davon ausgegangen, daß alle Keulenpositionen bereits einmal beleuchtet wurden und daher Soll-Beleuchtungszeitpunkte berechnet wurden. Beim Einschalten des Radars ist dies aber nicht der Fall. Es ist daher notwendig, anfangs einen Satz von Soll-Beleuchtungszeitpunkten für alle Keulenpositionen vorzugeben.

Die einfachste Möglichkeit hierfür ist, einen Initialisierungssatz bereitzustellen, der z.B. dafür sorgt, daß zuerst die niedrigen Elevationen abgetastet werden, wobei alle Azimutwerte gleichberechtigt sind.

Man könnte auch mehrere Initialisierungssätze bereitstellen, die für den Beginn der Suche verschiedene Reihenfolgen der Abtastung vorgeben, etwa unter Betonung verschiedener Azimutbereiche oder mit Priorisierung höherer Elevationen.

Die ambitionierteste, allerdings verhältnismäßig aufwendige Art der Initialisierung bestünde darin, aus dem Zustand der Soll-Beleuchtungszeitpunkte beim vorhergehenden Ausschalten des Radars eine optimale Vorbesetzung für das nächste Wiedereinschalten abzuleiten.

Initialisierungsprobleme bestehen nicht nur bei den Soll-Beleuchtungszeiten, sondern praktisch bei allen auftretenden Größen. Von der Datenmenge her ist besonders wichtig das "Wissen des Radarmanagers über die einzelnen Keulenpositionen". Dieses Wissen beinhaltet insbesondere alle Parameter, die nötig sind, um die beschriebene Optimierung der Überwachungsreichweite durchzuführen. Dazu braucht man im Grundfall und im Abschattungsfall die Radialgeschwindigkeit $v_R$ und den Radarrückstrahlquerschnitt (der $c'$ bestimmt) der "Normbedrohung" in der betreffenden Keulenposition, die wegen Abschattungen maximal mögliche Sichtweite $R_o$ in der betreffenden Keulenposition und die Störleistungsdichte N dieser Keulenposition.

Die Optimierung der Signalformauswahl bei Clutter erfordert mindestens noch die Information darüber, ob sich in der betreffenden Keulenposition Clutter befindet oder nicht. Daneben sind für eine bessere Optimierung noch weitere Parameter nötig wie z.B. eine Vermutung über den Cluttertyp (Volumen- oder Bodenclutter), eine Schätzung der Clutterdichte (im Extremfall als Funktion der Entfernung), eine Schätzung des Entfernungsbereiches, in dem Clutter auftritt, und eine Schätzung der (Radial-) Geschwindigkeit des Clutters und der Streuung dieser Geschwindigkeit.

Da diese Informationen in einem realen Radar nicht direkt vorliegen, sondern erst aus der Signalverarbeitung gewonnen werden müssen, dürfen die Anforderungen an die Güte dieser Informationen nicht überzogen werden.

Bei der Initialisierung dieses "Wissens über die einzelnen Keulenpositionen" wird man im einfachsten Fall vom Clear-Zustand (kein Clutter, keine Störung, keine Abschattung) ausgehen und die Parameter entsprechend vorbesetzen. Beim Wiedereinschalten wird man auf dem Wissensstand beim Ausschalten aufsetzen wollen.

Bei der Initialisierung der Leistungsverteilung, d.h. der $p_{i,alt}$ kann man im einfachsten Fall von einer Gleichverteilung der Gesamtleistung 1 ausgehen.

$$P_{alt} = 1; \qquad p_{i,alt} = \frac{1}{n}. \quad (44)$$

Auch ein Wiederaufsetzen auf der Leistungsverteilung vor dem letzten Ausschalten sollte möglich sein, genauso wie die Wahl einer von (44) abweichenden a-priori-Leistungsverteilung.

Die Initialisierung von $\lambda$ muß dem Vorgehen bei der Leistungsverteilung und dem "Wissen über die einzelnen Keulenpositionen" angepaßt sein. Liegt dieses vor, dann ergibt sich $\lambda$ aus der Gleichung (38). In der Praxis werden sich für jedes i andere Werte von $\lambda$ ergeben, da man erst am Beginn der Iterationen steht. Man wird daher $\lambda$ für mehrere i berechnen und den Durchschnitt bilden.

Es folgt noch ein Anhang zur Ableitung der Formeln (5) und (6):

Ableiten von (4) ergibt.

$$\frac{dR_{\ddot{u}}}{dT} = c' \, (P/N)^{1/4} . 1/4 . T^{-3/4} - v_R$$

Nullsetzen der Ableitung liefert

$$v_R = \frac{c'}{4} (P/N)^{1/4} . T_{opt}^{-3/4} ,$$

woraus

$$T_{opt}^{3/4} = \frac{c'}{4v_R} (P/N)^{1/4}$$

folgt und weiter

$$T_{opt} = (\frac{c'}{4v_R})^{4/3} (P/N)^{1/3} .$$

Eine leichte Umformung liefert

$$T_{opt} = \left[ \left( \frac{c'}{4v_R} \right)^4 \frac{P}{N} \right]^{1/3}$$

Setzt man $T_{opt}$ in (4) ein, so erhält man:

$$R_{\ddot{u}} = c' \left[ \left( \frac{c'}{4v_R} \right)^4 \frac{P}{N} \right]^{1/12} \cdot \left( \frac{P}{N} \right)^{1/4} - v_R \cdot \left[ \left( \frac{c'}{4v_R} \right)^4 \frac{P}{N} \right]^{1/3}$$

$$= c' \left( \frac{c'}{4v_R} \right)^{1/3} \left( \frac{P}{N} \right)^{1/3} - \frac{c'}{4} \left( \frac{c'}{4v_R} \right)^{1/3} \left( \frac{P}{N} \right)^{1/3}$$

$$= \frac{3}{4} c' \left( \frac{c'}{4v_R} \right)^{1/3} \left( \frac{P}{N} \right)^{1/3} = \frac{3}{4} \left[ \frac{c'^4}{4v_R} \cdot \frac{P}{N} \right]^{1/3} .$$

## Patentansprüche

1. Multifuktionsradar mit einem eine elektronisch phasengesteuerte Antenne, einen Signalgenerator, einen Sender, einen Empfänger, eine Empfangssignalverarbeitungseinrichtung und eine Radarsteuerungseinrichtung umfassenden Radarmeßgerät, mit einer Zielverfolgungseinrichtung und mit einer Radarmanagement-Baugruppe, die unter anderem die Antennenkeulenposition, die Abtastperiode, die Signalform sowie die Signalverarbeitungsform fortlaufend festlegt und diesbezüglich Anweisungen als elementare Radaraufträge dem Radarmeßgerät zuführt, wodurch zu jedem Zeitpunkt die im Radarmeßgerät zur Verfügung stehende Radarleistung bei der Suche optimal ausgenutzt wird, **dadurch gekennzeichnet,**

daß im Grundfall, d.h. weder bei Vorliegen von Clutter noch von Abschattungen, zur Optimierung der Leistungsnutzung des für die Suche vorgegebenen Leistungsanteils P in einer Antennenkeule eine optimale Abtastperiode

$$T_{opt} = \left[ \left( \frac{c'}{4v_R} \right)^4 \frac{P}{N} \right]^{1/3}$$

und eine optimale Überwachungsreichweite

$$R_{ü} = \frac{3}{4} \left[ \frac{c'^4}{4v_R} \frac{P}{N} \right]^{1/3} = R_d - v_R \cdot T_{opt}$$

vorgesehen sind, wobei $v_R$ die Radialgeschwindigkeit eines zu entdeckenden, auf das Radar zufliegenden Objektes, c' eine vom zu entdeckenden Objekt und den festen Radarparametern abhängende Konstante, N die Rauschleistungsdichte, $R_d = c' (T_B/N)^{1/4}$ die Einzelentdeckungsreichweite und $T_B$ die gesamte Dauer der Signalform ist.

2. Multifunktionsradar nach Anspruch 1,
**dadurch gekennzeichnet**,
daß bei Vorhandensein einer sich aufgrund eines sich in der Entfernung $R_o$ befindenden Hindernisses ergebenden Abschattung folgende Zusammenhänge für die optimale Abtastperiode $T_{opt}$ und die optimale Überwachungsreichweite $R_{ü}$ vorliegen:

$$T_{opt} = \begin{cases} \left[ \left( \frac{c'}{4v_R} \right)^4 \cdot \frac{P}{N} \right]^{1/3} & \text{für } P \leq P_o \\[2em] T_o \cdot \frac{P_o}{P} & \text{für } P > P_o . \end{cases}$$

$$R_{ü} = \begin{cases} \frac{3}{4} \left[ \frac{c'^4}{4v_R} \cdot \frac{P}{N} \right]^{1/3} & \text{für } P \leq P_o \\[2em] R_o - v_R \cdot T_c \cdot \frac{P_o}{P} & \text{für } P > P_o , \end{cases}$$

wobei der Leistungswert $P_o$ durch

$$P_o = 4v_R \cdot N \cdot R_o^3 \cdot c'^{-4}$$

bestimmt wird.

3. Multifunktionsradar nach einem der vorhergehenden Ansprüche,
**dadurch gekennzeichnet**,
daß sich bei Vorhandensein von Clutter und bei zumindest näherungsweiser Vorgabe der Funktion
$$R_d^{opt} (T_B)$$
für die optimale Entdeckungsreichweite bei Clutter die numerische Optimierung der Überwachungsreichweite aufgrund des Zusammenhangs
$$R_{ü} = R_d^{opt} (T \cdot P) - v_R \cdot T$$
ergibt.

4. Multifunktionsradar nach Anspruch 3,
**dadurch gekennzeichnet**,
daß die Optimierung der Überwachungsreichweite offline vorgenommen wird.

5. Multifuktionsradar nach Anspruch 1,
**dadurch gekennzeichnet**,
daß die Verteilung des insgesamt für die Suche verfügbaren Leistungsanteils auf mehrere Antennenkeulen gemäß dem folgenden Zusammenhang erfolgt:

$$p_i = \frac{A_i \, N_i^{\propto}}{\sum\limits_{j=1}^{n} A_j \, N_j} \quad (1-v) \, .$$

wobei $p_i$ der für die i-te (i = 1...n) Antennenkeule zuzuteilende Leistungsanteil, $\alpha$ eine zwischen 0 und 1 liegende, die Steifigkeit des Bedeckungsdiagramms beschreibende Konstante, $N_i$ und $N_j$ die Rauschleistungsdichte der i-ten bzw. j-ten Antennenkeule, v der für die Zielverfolgung nötige Leistungsanteil und $A_i$ bzw. $A_j$ eine Konstante ist, die für den Fall $A_i$ folgendermaßen beschrieben ist:

$$A_i = \left[ \frac{\beta c_i}{4} \left( \frac{c'_i{}^4}{4v_{R_i}} \right)^{-\beta/3} \right]^{\frac{1}{\beta/3 + 1}} ,$$

wobei $\beta$ eine positive, von i unabhängige und mit $\alpha$ mittels der Beziehung $\alpha = \frac{\beta/3}{\beta/3 + 1}$ ; $0 < \alpha < 1$ verbundene Konstante, $v_{R_i}$ die für eine Bedrohungssituation typische Radialgeschwindigkeit eines zu entdeckenden, auf das Radar zufliegenden Objektes und $c_i$ ein in Raumwinkelbereichen mit einheitlicher Bedrohungssituation einheitlicher Wert ist.

6. Multifuktionsradar nach einem der Ansprüche 2 bid 4,
**dadurch gekennzeichnet**,
daß die Verteilung des insgesamt für die Suche verfügbaren Leistungsanteils auf mehrere Antennenkeulen durch Optimierung einer vorgegebenen Nutzenfunktion

$$u(R_1, \ldots, R_n) = - \sum\limits_{i=1}^{n} c_i \, R_i^{-\beta} ,$$

wobei $R_i$ die Überwachungsreichweite in der i-ten Antennenkeule (i = 1...n), $c_i$ ein in Raumwinkelbereichen mit einheitlicher Bedrohungssituation einheitlicher Wert und $\beta$ eine positive, von i unabhängige Konstante ist, durch ein im Takt der Generierung der elementaren Radaraufträge laufendes Iterationsverfahren erfolgt, dem als Bestimmungsgleichung für den Leistungsanteil $p_i$ der i-ten Antennenkeule die Funktion

$$\frac{\partial u}{\partial p_i} = c_i \, \beta \, (R_i(p_i))^{-\beta - 1} \frac{d R_i}{d p_i} = \lambda ,$$

zugrundeliegt, worin $\lambda$ so zu wählen ist, daß

$$\sum\limits_{i=1}^{n} p_i = 1 - v ,$$

wobei v der für die Zielverfolgung nötige Leistungsanteil ist, und daß bei jeder Generierung eines elementaren Radarauftrages folgende Arbeitsschritte a) bis d) ablaufen, wobei sowohl $\lambda$ als auch die Summe P der tatsächlichen Sendeleistungsanteile $p_i$ jeweils fortgeschrieben wird:

15

a) Berechnung einer Lösung $p_i'$ der Bestimmungsgleichung mit dem alten $\lambda$; und gleichzeitige Bestimmung von $f'(p_i')$ der Ableitung der rechten Seite der Bestimmungsgleichung an der Stelle $p_i'$,

b) Anpassung des Leistungsanteils gemäß

$$p_{i,neu} = p'_i \cdot \frac{1 - v}{P_{alt} - p_{i,alt} + p'_i}$$

und Generierung des entsprechenden elementaren Radarauftrags,

c) Fortschreibung der Summenleistung P gemäß

$$P_{neu} = P_{alt} - p_{i,alt} + p_{i,neu}$$

d) Fortschreibung des Parameters $\lambda$ gemäß

$$\lambda_{neu} = \lambda_{alt} - f'(p'_i) \cdot (p_{i,neu} - p'_i)$$

oder einer ähnlichen Iterationsgleichung.

7. Multifuktionsradar nach Anspruch 6,
**dadurch gekennzeichnet**,
daß nach einer Initialisierung ein elementarer Suchauftrag in folgenden Schritten generiert und die Planung des jeweils folgenden Suchauftrags fortgeschrieben wird:

a) Auswahl der nächsten zu beleuchtenden Keulenposition in Abhängigkeit von den sich bei der Optimierung der Überwachungsreichweite ergebenden optimalen Abtastperioden $T_{opt}$ jeder Keule, die den nächsten Abtastzeitpunkt

$$T_{soll,\, j+1} = T_{ist,\, j} + T_{opt},$$

jeder Keule bestimmen, so daß in der Regel jeweils diejenige Keulenposition als nächste beleuchtet wird, für die $T_{soll,j+1}$ am niedrigsten ist,

b) Feststellung der Störleistung in dieser Keulenposition,

c) Verteilung des insgesamt für die Suche verfügbaren Leistungsanteils auf mehrere Antennenkeulen durch Optimierung einer vorgegebenen Nutzenfunktion

$$u(R_1, \ldots, R_n) = -\sum_{i=1}^{n} c_i R_i^{-\beta},$$

wobei $R_i$ die Überwachungsreichweite in der i-ten Antennenkeule (i = 1...n), $c_i$ ein in Raumwinkelbereichen mit einheitlicher Bedrohungssituation einheitlicher Wert und $\beta$ eine positive, von i unabhängige Konstante ist, durch ein im Takt der Generierung der elementaren Radaraufträge ablaufendes Iterationsverfahren, dem als Bestimmungsgleichung die Funktion

$$\frac{\partial u}{\partial p_i} = c_i \beta (R_i(p_i))^{-\beta - 1} \frac{d R_i}{d p_i} = \lambda$$

zugrundeliegt, die unter Benutzung der sich aus Störleistung und sonstigem Wissen über die Keulenposition ergebenden Funktion $R_i(p_i)$ der gelöst wird und worin $\lambda$ so zu wählen ist, daß

$$\sum_{i=1}^{n} p_i = 1 - v,$$

wobei v der für die Zielverfolgung nötige Leistungsanteil ist und die Berechnung einer Lösung der $p_i$, Bestimmungsgleichung mit dem alten $\lambda$ und gleichzeitig die Bestimmung von $f'(p_i')$ der Ableitung der rechten Seite der Bestimmungsgleichung an der Stelle $p_i'$ erfolgt,

d) Anpassung des Leistungsanteils gemäß

$$p_{i,neu} = p'_i \cdot \frac{1 - v}{P_{alt} - p_{i,alt} + p'_i}$$

e) Ableitung einer optimalen Abtastperiode $T_{opt}$ zur Optimierung der Leistungsnutzung des für die Suche vorgesehenen Leistungsanteils P in einer einzigen Antennenkeule und Generierung eines elementaren Radarauftrags,

f) Fortschreibung der Summe P gemäß

$$P_{neu} = P_{alt} - p_{i,alt} + p_{i,neu}$$

und des Parameters $\lambda$ gemäß

$$\lambda_{neu} = \lambda_{alt} - f'(p'_i) \cdot (p_{i,neu} - p'_i)$$

oder einer ähnlichen Iterationsgleichung,

g) Vormerken des geplanten Zeitpunktes für die nächste Beleuchtung dieser Keulenposition aufgrund der ermittelten optimalen Abtastperiode $T_{opt}$.

8. Multifunktionsradar nach Anspruch 7,
**dadurch gekennzeichnet,**
daß im Grundfall, d.h. bei Nichtvorhandensein von Clutter und/oder Abschattungen, die optimale Abtastperiode durch folgenden Zusammenhang bestimmt wird:

$$T_{opt} = \left[ (\frac{c'}{4v_R})^{4/3} (P/N)^{-1/3} \right] ,$$

wobei $v_R$ die Radialgeschwindigkeit eines zu entdeckenden, auf das Radar zufliegenden Objektes, c' eine vom zu entdeckenden Objekt und den fester Radarparametern abhängende Konstante und N die Rauschleistungsdichte ist.

9. Multifunktionsradar nach Anspruch 7,
**dadurch gekennzeichnet,**
daß sich die optimale Abtastzeit bei Vorhandensein einer sich aufgrund eines sich in der Entfernung $R_o$ befindlichen Hindernis ergebenden Abschattung aus folgendem Zusammenhang herleitet:

$$T_{opt} = \begin{cases} \left[ \left( \frac{c'}{4v_R} \right)^4 \cdot \frac{P}{N} \right]^{1/3} & \text{für } P \leqq P_o \\[4mm] T_o \cdot \frac{P_o}{P} & \text{für } P > P_o , \end{cases}$$

wobei der Leistungsanteil $P_o$ durch

$$P_o = 4v_R . N . R_o^3 . c'^{-4}$$

gegeben ist.

10. Multifunktionsradar nach einem der Ansprüche 7 bis 9,
**dadurch gekennzeichnet,**
daß aus dem Zustand der Soll-Beleuchtungszeitpunkte beim vorhergehenden Ausschalten des Radars eine optimale Vorbesetzung für die Intialisierung bei der nächsten Wiedereinschaltung abgeleitet wird.

**Claims**

1. Multifunction radar having a radar measuring system comprising an electronically phase-controlled antenna, a signal generator, a transmitter, a receiver, a reception signal processing device and a radar control device, having a target tracking device and having a radar management assembly, which progressively establishes inter alia the antenna lobe position, the sampling period, the signal shape and the form of signal processing, and, with respect to this, feeds instructions as elementary radar requests to the radar measuring system, whereby at each instant the radar power available in the radar measuring system is optimally utilized in the search, characterized in that in the basic case, i.e. in the presence neither of clutter nor of shadowings, for the optimization of the power utilization of the power component P predetermined for the search, in an antenna lobe, an optimal sampling period

$$T_{opt} = \left[ \left( \frac{c'}{4v_R} \right)^4 \frac{P}{N} \right]^{1/3}$$

17

and an optimal monitoring range

$$R_{\ddot{u}} = \frac{3}{4} \left[ \frac{c'^4}{4 v_R} \frac{P}{N} \right]^{1/3} = R_d - v_R \cdot T_{opt}$$

are provided, in which $v_R$ is the radial velocity of an object to be detected which is flying towards the radar, $c'$ is a constant dependent upon the object to be detected in the fixed radar parameters, N is the noise power density, $R_d = c' (T_B/N)^{1/4}$ is the individual detection range and $T_B$ is the overall duration of the signal shape.

2.  Multifunction radar according to Claim 1, characterized in that in the event of the presence of a shadowing arising on account of an obstacle situated at the distance $R_o$ the following interrelationships are applicable for the optimal sampling period $T_{opt}$ and the optimal monitoring range $R_{\ddot{u}}$:

$$T_{opt} = \begin{cases} \left[ \left( \frac{c'}{4 v_R} \right)^4 \cdot \frac{P}{N} \right]^{1/3} & \text{for } P \leq P_o \\ T_o \cdot \dfrac{P_o}{P} & \text{for } P > P_o. \end{cases}$$

$$R_{\ddot{u}} = \begin{cases} \dfrac{3}{4} \left[ \dfrac{c'^4}{4 v_R} \cdot \dfrac{P}{N} \right]^{1/3} & \text{for } P \leq P_o \\ R_o - v_R \cdot T_o \cdot \dfrac{P_o}{P} & \text{for } P > P_o \end{cases},$$

in which the power value $P_o$ is determined by
$$P_o = 4 v_R \cdot N \cdot R_o^3 \cdot c'^{-4}.$$

3.  Multifunction radar according to one of the preceding claims, characterized in that in the presence of clutter and given an at least approximate prescription of the function
$$R_d^{opt} (T_B)$$
for the optimal detection range with clutter, the numerical optimization of the monitoring range is obtained on the basis of the interrelationship
$$R_{\ddot{u}} = R_d^{opt} (T \cdot P) - v_R \cdot T.$$

4.  Multifunction radar according to Claim 3, characterized in that the optimization of the monitoring range is undertaken offline.

5.  Multifunction radar according to Claim 1, characterized in that the distribution of the power component, available overall for the search, among a plurality of antenna lobes takes place in accordance with the following interrelationship:

$$p_i = \frac{A_i \, N_i^{\,\alpha}}{\sum\limits_{j=1}^{n} A_j \, N_j} \; (1-v).$$

in which $p_i$ is the power component to be allocated for the i-th (i = 1...n) antenna lobe, $\alpha$ is a constant which lies between 0 and 1 and describes the stiffness of the coverage diagram, $N_i$ and $N_j$ are the noise power density of the i-th and respectively j-th antenna lobe, v is the power component necessary for the target tracking and $A_i$ and $A_j$ respectively are each a constant which is described as follows for the case $A_i$:

$$A_i = \left[ \frac{\beta c_i}{4} \left( \frac{c'_i{}^{4}}{4 v_{R_i}} \right)^{-\beta/3} \right]^{\frac{1}{\beta/3 \,+\, 1}} ,$$

in which $\beta$ is a positive constant which is independent of i and is linked to $\alpha$ by means of the relation $\alpha = \dfrac{\beta/3}{\beta/3 + 1}$; $0 < \alpha < 1$, $v_{R_i}$ is the radial velocity, typical for a threat situation, of an object to be detected which is flying towards the radar, and $c_i$ is a value which is uniform in solid angle regions having a uniform threat situation.

6. Multifunction radar according to one of Claims 2 to 4, characterized in that the distribution of the power component, available overall for the search, among a plurality of antenna lobes takes place by optimization of a prescribed benefit function

$$u \, (R_1, \, \dots, \, R_n) = - \sum_{i=1}^{n} c_i \, R_i^{\,-\beta} ,$$

in which $R_i$ is the monitoring range in the i-th antenna lobe (i = 1...n), $c_i$ is a value which is uniform in solid angle regions having a uniform threat situation, and $\beta$ is a positive constant independent of i, by an iterative process proceeding in the cycle of the generation of the elementary radar requests, which process is based on the function

$$\frac{\partial u}{\partial p_i} = c_i \, \beta \, (R_i(p_i))^{-\beta - 1} \frac{d \, R_i}{d \, p_i} = \lambda ,$$

as determinative equation for the power component $p_i$ of the i-th antenna lobe,
wherein $\lambda$ is to be selected so that

$$\sum_{i=1}^{n} p_i = 1 - v ,$$

in which v is the power component necessary for the target tracking, and in that in the case of each generation of an elementary radar request the following operating steps a) to d) proceed, in which both $\lambda$ and also the sum P of the actual transmission power components $p_i$ are in each instance updated:
a) computation of a solution $p_i'$ of the determinative equation with the old $\lambda$; and simultaneous determination of $f'(p_i')$ of the derivative of the right-hand side of the determinative equation at the position $p_i'$,
b) adaptation of the power component in accordance with

$$p_{i,new} = p'_i \cdot \frac{1 - v}{P_{old} - p_{i,old} + p'_i}$$

and generation of the corresponding elementary radar request,
c) updating of the sum power P in accordance with

$$P_{new} = P_{old} - p_{i,old} + p_{i,new}$$

d) updating of the parameter $\lambda$ in accordance with

$$\lambda_{new} = \lambda_{old} - f'(p'_i) \cdot (p_{i,new} - p'_i)$$

or a similar iterative equation.

7. Multifunction radar according to Claim 6, characterized in that after an initialization an elementary search request is generated in following steps and the planning of the respectively following search request is updated:

a) selection of the next lobe position, to be illuminated, dependent on the optimum sampling period $T_{opt}$, obtained in the course of the optimization of the monitoring range, of each lobe, which determine the next sampling instant

$$T_{ref, j + 1} = T_{actual, j} + T_{opt}$$

of each lobe, so that as a rule in each instance that lobe position for which $T_{ref,j+1}$ is lowest is illuminated next,

b) establishment of the disturbance power in this lobe position,

c) distribution of the power component, available overall for the search, among a plurality of antenna lobes by optimization of a prescribed benefit function

$$u(R_1, \ldots, R_n) = - \sum_{i=1}^{n} c_i R_i^{-\beta},$$

in which $R_i$ is the monitoring range in the i-th antenna lobe ($i = 1...n$), $c_i$ is a value which is uniform in solid angle regions having a uniform threat situation and $\beta$ is a positive constant independent of i, by an iterative process proceeding in the cycle of the generation of the elementary radar requests, which process is based on the function

$$\frac{\partial u}{\partial p_i} = c_i \beta (R_i(p_i))^{-\beta - 1} \frac{d R_i}{d p_i} = \lambda$$

as determinative equation, which is solved using the function $R_i(P_i)$ obtained from disturbance power and other knowledge of the lobe position, and wherein $\lambda$ is to be selected so that

$$\sum_{i=1}^{n} p_i = 1 - v,$$

in which v is the power component necessary for the target tracking, and the computation of a solution $p_i$, of the determinative equation takes place using the old $\lambda$ and at the same time the determination of $f'(p_i')$ of the derivative of the right-hand side of the determinative equation takes place at the position $p_i'$,

d) adaptation of the power component in accordance with

$$p_{i,new} = p'_i \cdot \frac{1 - v}{P_{old} - p_{i,old} + p'_i}$$

e) derivation of an optimal sampling period $T_{opt}$ for the optimization of the power utilization of the power component P, provided for the search, in a single antenna lobe and generation of an elementary radar request,

f) updating of the sum P in accordance with

$$P_{new} = P_{old} - p_{i,old} + p_{i,new}$$

and of the parameter $\lambda$ in accordance with

$$\lambda_{new} = \lambda_{old} - f'(p'_i) \cdot (p_{i,new} - p'_i)$$

or a similar iterative equation,

g) noting of the planned instant for the next illumination of this lobe position on the basis of the determined optimal sampling period $T_{opt}$.

8. Multifunction radar according to Claim 7, characterized in that in the basic case, i.e. in the absence of clutter and/or shadowings, the optimal sampling period is determined by the following interrelationship:

$$T_{opt} = \left[ \left( \frac{c'}{4v_R} \right)^{4/3} (P/N) \right]^{1/3} ,$$

in which $v_R$ is the radial velocity of an object to be detected which is flying towards the radar, $c'$ is a constant dependent upon the object to be detected and the fixed radar parameters, and N is the noise power density.

9. Multifunction radar according to Claim 7, characterized in that the optimal sampling time in the presence of a shadowing arising on account of an obstacle situated at the distance $R_o$ is derived from the following interrelationship:

$$T_{opt} = \begin{cases} \left[ \left( \frac{c'}{4v_R} \right)^4 \cdot \frac{P}{N} \right]^{1/3} & \text{for } P \leqq P_o \\ \\ T_o \cdot \frac{P_o}{P} & \text{for } P > P_o , \end{cases}$$

in which the power component $P_o$ is given by
$$P_o = 4v_R \cdot N \cdot R_o^3 \cdot c'^{-4}.$$

10. Multifunction radar according to one of Claims 7 to 9, characterized in that an optimal preoccupation for the initialization in the next reactivation is derived from the condition of the reference illumination times in the preceding turn-off of the radar.

## Revendications

1. Radar multifonction comprenant un appareil de mesure par radar comportant une antenne à commande électronique de phase, un générateur de signal, un émetteur, un récepteur, un dispositif de traitement du signal de réception et un dispositif de commande du radar, un dispositif de poursuite de cible et un module d'exploitation du radar, qui détermine continûment entre autres la position des lobes de rayonnement de l'antenne, la période de balayage, la forme des signaux ainsi que la forme de traitement des signaux et qui envoie en fonction de cela en tant que commandes élémentaires de radar des instructions à l'appareil de mesure par radar, ce qui rend optimale à chaque instant l'utilisation de la puissance du radar disponible dans l'appareil de mesure par radar lors de la recherche,
caractérisé en ce que
dans le cas de base, c'est-à-dire en l'absence de clutter et d'occultations, il est prévu, pour optimiser l'utilisation de la composante P de la puissance prescrite pour la recherche dans un lobe de rayonnement de l'antenne, une période optimale de balayage

$$T_{opt} = \left[ \left( \frac{c'}{4v_R} \right)^4 \frac{P}{N} \right]^{1/3}$$

et une portée optimale de surveillance

$$R_{\ddot{u}} = \frac{3}{4} \left[ \frac{c'^4}{4v_R} \frac{P}{N} \right]^{1/3} = R_d - v_R \cdot T_{opt}$$

$v_R$ étant la vitesse radiale d'un objet à détecter volant vers le radar, c' étant une constante dépendant de l'objet à détecter et des paramètres fixes du radar, N étant la densité de puissance de bruit, $R_d = c'(T_B/N)^{1/4}$ étant la portée de détection individuelle et $T_B$ étant la durée totale de la forme de signal.

2. Radar multifonction suivant la revendication 1,
caractérisé en ce que
dans le cas d'une occultation se produisant du fait d'un obstacle situé à la distance $R_0$, les relations suivantes pour la période $T_{opt}$ optimale de balayage et la portée $R_{\ddot{u}}$ optimale radar de surveillance sont valables :

$$T_{opt} = \begin{cases} \left[ \left( \dfrac{c'}{4v_R} \right)^4 \cdot \dfrac{P}{N} \right]^{1/3} & \text{pour} \quad P \leqq P_0 \\[4mm] T_0 \cdot \dfrac{P_0}{P} & \text{pour} \quad P > P_0 . \end{cases}$$

$$R_{\ddot{u}} = \begin{cases} \dfrac{3}{4} \left[ \dfrac{c'^4}{4v_R} \cdot \dfrac{P}{N} \right]^{1/3} & \text{pour} \quad P \leqq P_0 \\[4mm] R_0 - v_R \cdot T_C \cdot \dfrac{P_0}{P} & \text{pour} \quad P > P_0 \end{cases}$$

la valeur $P_0$ de la puissance étant donnée par
$$P_0 = 4v_R \cdot N \cdot R_0^3 \cdot c'^{-4}$$

3. Radar multifonction suivant l'une des revendications précédentes,
caractérisé en ce que
en cas de clutter et en cas de donnée au moins approximative au préalable de la fonction
$$R_d{}^{opt}(T_B)$$
pour la portée optimale de détection en cas de clutter, la meilleure valeur numérique de la portée de surveillance est donnée par la relation
$$R_{\ddot{u}} = R_d{}^{opt}(T \cdot P) - v_R \cdot T$$

4. Radar multifonction suivant la revendication 3,
caractérisé en ce que
l'optimisation de la portée radar de surveillance s'effectue en différé.

5. Radar multifonction suivant la revendication 1,
caractérisé en ce que
la répartition de la partie de la puissance disponible au total pour la recherche s'effectue sur plusieurs lobes de rayonnement de l'antenne selon la relation suivante :

$$P_i = \frac{A_i N_i{}^{\alpha}}{\sum\limits_{j=1}^{n} A_j N_j} (1-v) .$$

$p_i$ étant la partie de la puissance répartie sur le $i^{\text{ème}}$ (i = 1 ... n) lobe de rayonnement de l'antenne, a étant une constante comprise entre 0 et 1 et décrivant la directivité du diagramme de rayonnement, $N_i$ et $N_j$

étant les densités de puissance de bruit des $i^{ème}$ et $j^{ème}$ lobes de rayonnement de l'antenne, v étant la partie de la puissance nécessaire à la poursuite de la cible et $A_i$ et $A_j$ étant des constantes, qui pour $A_i$ sont données par la relation :

$$A_i = \left[ \frac{\beta c_i}{4} \left( \frac{c'_i{}^4}{4 v_{R_i}} \right)^{-\beta/3} \right]^{\frac{1}{\beta/3 + 1}}$$

β étant une constante positive, indépendante de i et liée à α par la relation $\alpha = \dfrac{\beta/3}{\beta/3 + 1}$ ; $0 < \alpha < 1$, $v_{R_i}$ étant la vitesse radiale typique pour une situation de menace, d'un objet à détecter volant vers le radar et $c_i$ étant une valeur, qui est uniforme pour les angles solides de l'espace à situation uniforme de menace.

6.  Radar multifonction suivant l'une des revendications 2 à 4,
    caractérisé en ce que
    la répartition de la partie de la puissance disponible au total pour la recherche s'effectue sur plusieurs lobes de rayonnement de l'antenne par optimisation d'une fonction prescrite de rendement

$$u(R_1, \ldots, R_n) = - \sum_{i=1}^{n} c_i R_i^{-\beta}$$

dans laquelle $R_i$ est la portée de surveillance dans le i-ième lobe de rayonnement de l'antenne (i = 1 ... n), $c_i$ étant une valeur, qui est uniforme dans les angles solides de l'espace à situation uniforme de menace et β étant une constante positive indépendante de i, par un procédé itératif, qui s'effectue pendant la cadence de génération des commandes élémentaires de radar et qui se base sur la fonction

$$\frac{\partial u}{\partial p_i} = c_i \beta (R_i(p_i))^{-\beta - 1} \frac{d R_i}{d p_i} = \lambda ,$$

en tant qu'équation de définition pour la partie $p_i$ de la puissance du i-ième lobe de rayonnement de l'antenne, λ étant à choisir de sorte que

$$\sum_{i=1}^{n} p_i = 1 - v,$$

v étant la partie de la puissance nécessaire pour la poursuite de la cible, et il s'effectue lors de chaque génération d'une commande élémentaire de radar les étapes opératoires a) à d) suivantes, λ ainsi que la somme P des parties $p_i$ réelles de puissance d'émission, étant explicitées ci-après :
a) calcul d'une solution $p_i'$ de l'équation de définition avec l'ancienne valeur de λ; détermination simultanée de $f'(p_i')$ de la dérivée de la partie droite de l'équation pour la position $p_i'$,
b) adaptation de la partie de la puissance suivant la relation

$$p_{i,neu} = p'_i \cdot \frac{1 - v}{P_{alt} - p_{i,alt} + p'_i}$$

et génération de la commande élémentaire correspondante de radar,
c) mise à jour de la puissance P de sommes suivant

$$P_{neu} = P_{alt} - p_{i,alt} + p_{i,neu}$$

d) mise à jour du paramètre λ suivant

$$\lambda_{neu} = \lambda_{alt} f'(p'_i) \cdot (p_{i,neu} - p'_i)$$

où une équation semblable d'itération.

7.  Radar multifonction suivant la revendication 6,
    caractérisé en ce que
    on génère après une initialisation une commande élémentaire de recherche lors des étapes suivantes et on prévoit de mettre à jour la commande de recherche suivante :

a) sélection de la prochaine position d'un lobe à balayer en fonction des périodes Topt optimales de balayage de chaque lobe de rayonnement, qui sont obtenues lors de l'optimisation de la portée de surveillance et qui déterminent le prochain instant de balayage

$$T_{soll,\, j+1} = T_{ist,\, j} + T_{opt} \, ,$$

de chaque lobe de rayonnement de sorte qu'en général la prochaine position de lobe balayée est celle pour laquelle $T_{soll,j+1}$ est la plus petite,

b) détermination de la puissance de bruit dans cette position de lobe de rayonnement,

c) répartition de la partie de la puissance disponible au total pour la recherche, sur plusieurs lobes de rayonnement de l'antenne par optimisation d'une fonction prescrite de rendement

$$u \,(R_1, \, \ldots, \, R_n) = - \sum_{i=1}^{n} c_i \, R_i^{-\beta} \, ,$$

dans laquelle $R_i$ est la portée de surveillance dans le $i^{ème}$ lobe d'antenne (i = 1 ... n), $c_i$ est une valeur, qui est uniforme dans des angles solides de l'espace à situation uniforme de menace et $\beta$ est une constante positive indépendante de i, par un procédé itératif, qui s'effectue pendant la cadence de la génération des commandes élémentaires de radar et qui se base sur la fonction

$$\frac{\partial u}{\partial p_i} = c_i \, \beta \, (R_i(p_i))^{-\beta-1} \frac{d\, R_i}{d\, p_i} = \lambda$$

en tant qu'équation de définition, qui est résolue en utilisant la fonction $R_i \, (p_i)$ obtenue à partir de la puissance de bruit et de diverses informations concernant la position du lobe et dans laquelle il faut choisir $\lambda$, de telle sorte que

$$\sum_{i=1}^{n} p_i = 1 - v,$$

v étant la partie de la puissance nécessaire à la poursuite de la cible, et le calcul d'une solution $p_i$ de l'équation de définition avec l'ancienne valeur de $\lambda$ et en même temps la détermination de $f'(p_i')$ de la dérivée de la partie de droite de l'équation de la définition pour la position $p_i'$ s'effectuant,

d) adaptation de la partie de la puissance suivant

$$p_{i,neu} = p_i' \cdot \frac{1 - v}{P_{alt} - p_{i,alt} + p_i'}$$

e) obtention d'une période $T_{opt}$ optimale de balayage pour optimiser le rendement en puissance de la partie P de la puissance prévue pour la recherche dans un seul lobe de rayonnement de l'antenne et génération d'une commande élémentaire de radar,

f) mise à jour de la somme P suivant

$$P_{neu} = P_{alt} - p_{i,alt} + p_{i,neu}$$

et du paramètre $\lambda$ suivant

$$\lambda_{neu} = \lambda_{alt} - f'(p_i') \cdot (p_{i,neu} - p_i')$$

ou suivant une équation semblable d'itération,

g) prévision de l'instant prévu pour le prochain balayage de cette position de lobe en se basant sur la période $T_{opt}$ de balayage optimal déterminé.

8.  Radar multifonction selon la revendication 7, caractérisé en ce que dans le cas de base, c'est-à-dire en l'absence de clutter et/ou en cas d'absence d'occultations, la période optimale de balayage est donnée par la relation suivante :

$$T_{opt} = \left[ \left(\frac{c_i}{4 v_R}\right)^{4/3} (P/N) \right]^{1/3}$$

$v_R$ étant la vitesse radiale d'un objet à détecter volant vers le radar, c' étant une constante dépendant de l'objet à détecter et des paramètres fixes du radar et N étant la densité de puissance de bruit.

9. Radar multifonction suivant la revendication 7,
caractérisé en ce que
la période optimale de balayage en présence d'une occultation due à un obstacle se trouvant à la distance $R_0$ est obtenue par la relation suivante :

$$T_{opt} = \begin{cases} \left[\left(\frac{c'}{4v_R}\right)^4 \cdot \frac{P}{N}\right]^{1/3} & \text{pour} \quad P \leq P_0 \\ T_0 \cdot \frac{P_0}{P} & \text{pour} \quad P > P_0, \end{cases}$$

la partie $P_0$ de la puissance étant donnée par
$$P_0 = 4v_R \cdot N \cdot R_0^3 \cdot c'^{-4}$$

10. Radar multifonction suivant l'une des revendications 7 à 9,
caractérisé en ce que
il est déduit de l'état des instants de balayage de consigne lors de la mise à l'arrêt précédente du radar une occupation préalable optimale pour l'initialisation lors de la prochaine remise en marche.

FIG 1

FIG 2

FIG 3

FIG 4

## FIG 5

## FIG 6

## FIG 7